# EUROPEAN PATENT APPLICATION

(11) **EP 3 251 956 A1**
(43) Date of publication of application: **06.12.2017**
(21) Application number: 16380026.1
(22) Date of filing: 31.05.2016
(51) Int. Cl.: B64F 1/305

(54) **DRIVE UNIT OF A PASSENGER BOARDING BRIDGE**

(71) Applicant: Thyssenkrupp Airport Systems, S.A., 33682 Mieres (Asturias) (ES); thyssenkrupp AG, 45143 Essen (DE)
(72) Inventor: Espina, Manuel Hernandez, 33423 Pruvia, Asturias (ES); Bermejo, Antonio Murias, 33209 Gijón, Asturias (ES); Peman, Alejandro Viesca, 33682 Mieres, Asturias (ES); Vazquez Hernandez, Antonio, 33450 Piedrad Blancas, Asturias (ES)
(74) Representative: thyssenkrupp Intellectual Property GmbH

(57) **Abstract**

Drive unit (3) of a passenger boarding bridge (1), comprising
- at least one wheel support (7), on which at least one wheel (8) is rotatably supported,
- protection means (9, 20) for reducing the risk that people get in contact with the wheels (8) during operation of the drive unit (3),
wherein the protection means comprise a wheel housing (9), having at least a circumferential housing face (16), in particular covering the wheel (8) in radial direction (r).

## Description

### Technical field

The invention refers to a drive unit of a passenger boarding bridge.

### Technical background

A passenger boarding bridge connects an airplane with a terminal building via a tunnel. In most cases the tunnel is extendible and comprise at least two tunnel sections, which can be telescoped for adjusting the length of the tunnel to the distance between an airplane door and the terminal building. The tunnel is movably supported by a drive unit, which can be mounted below a lift system. The lift system is used to adjust the height of the tunnel so that the end of the tunnel facing the airplane is aligned to the door of the airplane. By using the drive unit the plane facing end of the tunnel can be moved towards the airplane.

The drive unit comprises one or more wheels. In current applications these wheels are completely unprotected so that a person can get in touch with the wheels. Such a system is shown in WO 2014/146758 A1. Some recent systems therefore comprise sensors being mounted in front of the wheels (considered in driving direction), which mechanically detect an obstacle in the driveway. The sensors however cannot actually prevent a person from getting into contact with the wheels.

Other applications use a grid structure, which surround the complete drive system. This grid structure provides an improved safety.

### Summary of the invention

It is an object of the present invention to develop an improved drive unit of a passenger boarding bridge with respect to the safety installations. The object of the invention is solved by a drive unit of a passenger boarding bridge, the drive unit comprising: at least one wheel support, on which at least one wheel is rotatably supported, protection means for reducing the risk that people getting in contact with the wheels during operation of the drive unit. According to the invention the protection means comprise a wheel housing, having at least a circumferential housing face, in particular covering the wheel in radial direction.

The idea of the invention is to provide a closed plate covering the running surface of the wheel, so that the risk of injuries is further reduced. The housing is in particular able to keep a person completely away from the wheel. Compared to the known grid frame, the wheel housing is particularly able to prevent also that extremities of a person can get in contact with the wheel.

In particular the circumferential housing face covers at least 75% of the running surface of the wheel. However it must be possible that the wheels can touch the ground, so the wheels can not be completely covered.

Preferably the wheel housing further comprise at least a first radial housing face, in particular covering the wheel in first axial direction facing outwards. This first radial hosing is suitable for preventing that a person approaching from the side gets in contact with the wheels.

Preferably the wheel housing further comprises at least a second radial housing face, in particular covering the wheel in second axial direction facing inwards.

The radial housing face(s) may cover at least 75 % of the side projection of the wheel, preferably at least 85 %.

Preferably the second radial housing face has a wheel support recess for accommodation a section of the wheel support passing through the second axial housing face. Thus during mounting the wheel housing can be put onto the wheel support from above. The second radial housing face, when viewed in side view, may be U-shaped, in particular the wheel support recess can be designed open, when viewed in a downward direction.

Preferably the housing covering exactly one wheel is made from one piece. In particular a radial housing face and the circumferential housing face is made from one piece.

Preferably a minimum open gap between the housing and the ground is preferably not more than 200 mm, in particular not more than 150 mm, in particular not more than 120 mm. This value is measured when the lift is in an exact vertical orientation and thus the housing is aligned horizontally. Depending on the elevating height of the lift system the vertical orientation of the elevating legs may deviate from the exact vertical orientation. When the elevating leg is not in an exact vertical orientation the gap may be reduced to a minimum value of at least 40 mm, on the other side the gap may be increased to a maximum value of 200 mm.

A preferred material for the wheel housing is plastic, in particular fiber-reinforced plastic. The plastic is preferably a thermosetting plastic. Using plastics a closed cover can be created with a little amount of cost. The plastic wheel housing is suitable for being designed as a one piece part. Alternatively, but less preferred, the material of the housing can be made of sheet metal.

Preferably the wheel housing is supported by a frame structure, which in particular is arranged below the wheel housing. The frame structure may comprise a first frame bar carrying the wheel housing, arranged on a first side of the wheel support, in particular facing the airplane, and being parallel to the axis of the wheels, and/or a second frame bar carrying the wheel housing, arranged on a second side of the wheel support, in particular facing the terminal building, and being parallel to the axis of the wheels.

In particular the frame bar can also be used for carrying a collision sensor as already known. Thus the frame bar carrying the sensor, known from the prior art, can be used as a support frame for the wheel housing.

Preferably each wheel of the drive unit is covered by a separate housing, if the drive unit comprises more than one wheel.

The invention refers further to a passenger boarding bridge comprising a drive unit as described above. The passenger boarding bridge may comprise the features as described in the technical background above.

### Brief description of the drawings

The invention is described in more detail with the help of the drawings, the figures show:
- fig. 1: a passenger boarding bridge according to the prior art in side view;
- fig. 2: the passenger boarding bridge from figure 1 in front view;
- fig. 3: an improved drive unit of a passenger boarding bridge according to the prior art in front view;
- fig. 4: an inventive drive unit of a passenger boarding bridge schematically in front view, wherein the wheels are enclosed by a closed wheel housing;
- fig. 5: the wheel housing of the drive unit of figure 4 schematically in two different side views;
- fig. 6: a perspective view of the drive unit according to figure 4;
- fig. 7: the wheel housing of the drive unit of figure 4 having an alternative shape in side view;

### Description of the preferred embodiment

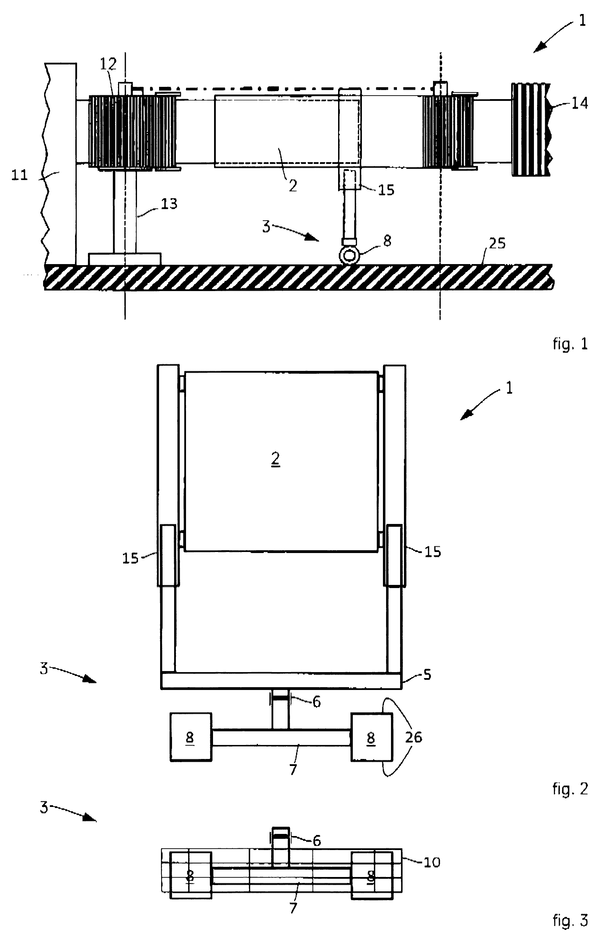

Figure 1 and 2 shows a passenger boarding bridge 1, as e.g. disclosed in WO 2014/146758 A1. The passenger boarding bridge 1 comprises a swiveling and extendible tunnel 2. A first end of the tunnel 2 is pivotably connected via a rotunda 12 to a terminal building 11. The rotunda 12 is supported by a stationary pillar 13. On a second end of the tunnel 2 the passenger boarding bridge 1 comprises a bridgehead with a canopy 14, which serves for establishing a weatherproof passage between an airplane (non shown) and the tunnel 2.

The tunnel 2 is movably supported by a drive unit 3, so that the tunnel 2 can be swiveled around the rotunda 12 and the tunnel 2 can be extended. The drive unit 3 comprises a number of wheels 8. A lifting mechanism 4 having two elevating legs 15 is arranged between the drive unit 3 and the tunnel, so that the height of the canopy 14 can be individually adjusted to the height of a door of the airplane.

The wheels 8 of the drive unit 3 are rotatably supported by a wheel support 7. The wheel supported 7 is connected by a bearing 6 to a cross member 5, so that the driving direction of the drive unit 3 can be varied. The cross member 5 is located below the tunnel 2 and arranged perpendicular to the main direction of the tunnel 2. At both sides of the cross member 5 the hydraulic elevating legs 15 for lifting the tunnel 2 are positioned. The wheels have in main a cylindrical shape; a circumferential running surface 26 (figure 2) is in contact with the ground 25 (figure 1).

Long years the wheels 8 were completely unprotected as shown in figure 2. Newer systems (figure 3) comprise a grid structure 10 surrounding the wheel support and the wheels for providing at least a basic protection and reduce the risk of injuries.

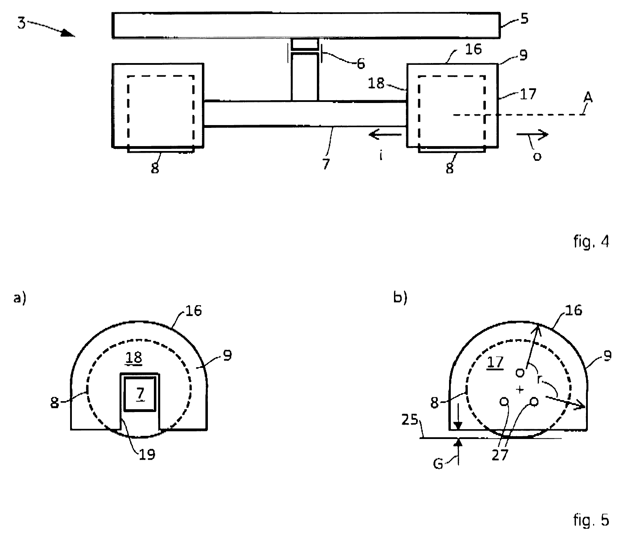

In figures 4 to 6 an inventive drive unit 3 is shown, which can be applied to the passenger boarding bridge 1 shown in figures 1 and 2 instead of the drive unit 3, shown in these figures. Main features of the drive unit 3 described with reference to figures 1 and 2 are also applicable to the inventive drive unit; so in the following description merely the differences of the inventive drive unit 3 compared to the drive unit 3 of figures 1 and 2 are described.

The inventive drive unit 3 comprises at least one wheel housing 9, for providing a protection for at least one of the wheels 8.

The wheel housing 3 provides in particular in main a closed cover over the wheels 8, merely an open gap G of approx. 15 cm remains between the wheel housing 9 and the ground. The closed cover may comprise inspections holes 27 or non shown mounting holes to provide access to screws or the like or provide access to a pneumatic valve of the wheel 8.

The wheel housing 9 comprises a circumferential housing face 16, covering the wheel 8 in a radial direction r. The running surface 26 of the wheel 3 is nearly completely covered by the circumferential housing face 16, merely the gap G and the underside of the wheel facing the ground is unprotected by the wheel housing.

The wheel housing 9 comprises two radial housing faces 17, 18, each covering the wheel 8 in a axial direction o, i. A first radial housing face 17 is arranged in an outward direction o of the wheel 8; a second radial housing face 18 is arranged in an outward direction i of the wheel 8. The second radial housing face 18 has in main a U-shape, comprising a recess 19 for allowing, that the wheel housing 9 is put over the wheel support 7, as can be seen in figure 5a.

The drive unit 3 comprises a frame structure 20, which has a number of frame bars 22. The frame bars 22 are arranged shortly above the ground 25 and define the top edge of the gap G. At the minimum the frame structure 20 comprises a front and a rear frame bar 22 fr and 22rr, which are arranged in driving direction in front of the drive unit. Optionally the frame structure 20 comprises side frame bars 22rhs, Ihs, arranged perpendicular to the driving direction. The frame bars 22 fr and 22rr may carry collision sensors (not shown). The side bars are attached to the front and the rear bars 22fr, 22rr. The front and rear bars 22fr, 22rr are attached to the wheel support 7 by supporting bars 21.

The wheel housing 9 rests on the frame structure 20. The mounting protrusion 23 of the wheel housing 9 are fixed via screw connections 24 to the bars 22 of the frame structure 21.

The running surface 26 of the wheel 3 is nearly completely covered by the circumferential housing face 16, merely the gap G is unprotected.

The wheel housing 9 has on its first radial housing face 17, facing axially outwards, at least one, in particular three, inspection holes 17. These inspection holes 17 may be distributed circumferentially around the axis of rotation of the wheel 8. The inspection holes 17 enable a first inspection of the fixing bolt or other components covered by the wheel housing prior to detaching the wheel housing.

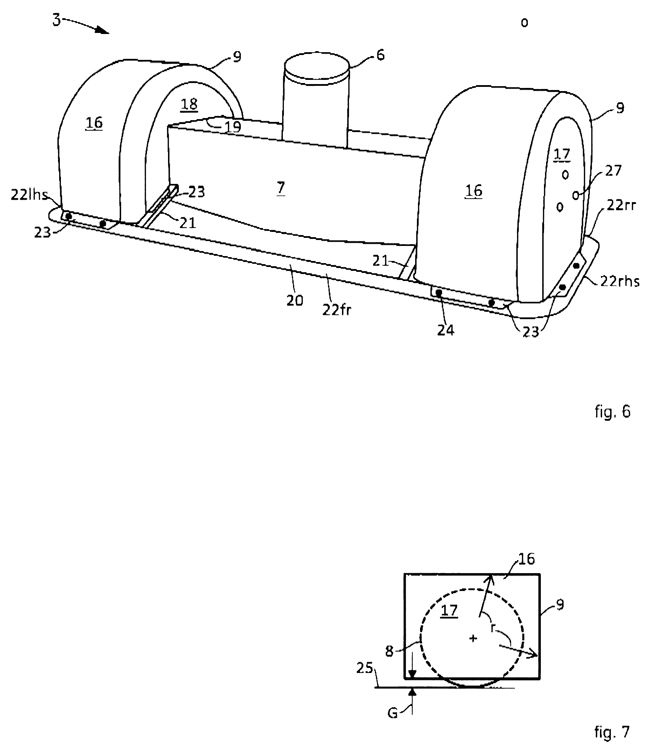

Figure 7 shows the side view of a further inventive drive unit; compared to the embodiment shown in figure 5 the circumferential housing face 16 has a more edged shape.

### List of reference signs

- 1: passenger boarding bridge
- 2: tunnel
- 3: drive unit
- 4: lifting mechanism
- 5: cross member
- 6: bearing
- 7: wheel support
- 8: wheel
- 9: wheel housing
- 10: grid structure
- 11: terminal building
- 12: rotunda
- 13: rotunda column
- 14: bridgehead with canopy
- 15: elevating leg
- 16: circumferential housing face
- 17: first radial housing face
- 18: second radial housing face
- 19: wheel support recess
- 20: frame structure
- 21: supporting bar
- 22: front/rear frame bar
- 23: mounting protrusion
- 24: screwed connection
- 25: ground
- 26: running surface
- 27: inspection hole

- A: axis of wheels
- G: gap between housing and ground
- r: radial direction
- i: axial inward facing direction
- o: axial outward facing direction

## Claims

1. Drive unit (3) of a passenger boarding bridge (1), comprising
- at least one wheel support (7), on which at least one wheel (8) is rotatably supported,
- protection means (9, 20) for reducing the risk that people getting in contact with the wheels (8) during operation of the drive unit (3),
**characterized in**
**that** the protection means comprise a wheel housing (9), having at least a circumferential housing face (16), in particular covering the wheel (8) in radial direction (r).

2. Drive unit (3) according to the preceding claim,
**characterized in**
**that** the circumferential housing face (16) covers at least 75% of a running surface (26) of the wheel (8).

3. Drive unit (3) according to any of the preceding claims,
**characterized in**
**that** the wheel housing (9) further having at least a first radial housing face (17), in particular covering the wheel (8) in a first axial direction (o) facing outwards.

4. Drive unit (3) according to any of the preceding claims,
**characterized in**
**that** the wheel housing (9) further having at least a second radial housing face (18), in particular covering the wheel (8) in a second axial direction (i) facing inwards.

5. Drive unit (3) according to claim 3 or 4,
**characterized in**
**that** the radial housing face (17, 18) covers at least 75 % of the side projection of the wheel (8).

6. Drive unit (3) according to the previous claim,
**characterized in**
**that** the second radial housing face (18) has a wheel support recess (19) for accommodation a section of the wheel support (7) passing through the second axial housing face (18).

7. Drive unit (3) according to any of claims 5 or 6,
**characterized in**
**that** the second radial housing face (18), when viewed in side view, is U-shaped, in particular that the wheel support recess (19) is open in a downward direction,

8. Drive unit (3) according to any of the preceding claims,
**characterized in**
**that** a minimum open gap (G) between the housing and the ground is maximum 220 mm, in particular maximum 200 mm, in particular maximum 150 mm.

9. Drive unit (3) according to the previous claim,
**characterized in**
**that** the wheel housing (9) is made of plastic, in particular fiber-reinforced plastic.

10. Drive unit (3) according to the previous claim,
**characterized in**
**that** the plastic is a thermosetting plastic.

11. Drive unit (3) according to any of the preceding claims,
**characterized in**
**that** the wheel housing (9) is supported by a frame structure (22), which in particular is arranged below the wheel housing (9).

12. Drive unit (3) according to the preceding claim,
**characterized in**
**that** the frame structure (22) comprises
- a first frame bar (22fr) carrying the wheel housing (9), arranged on a first side of the wheel support (7), in particular facing the airplane, and being parallel to the axis of the wheels (A),
and/or
- a second frame bar (22rr) carrying the wheel housing (9), arranged on a second side of the wheel support (7), in particular facing the terminal building, and being parallel to the axis of the wheels (A).

13. Drive unit (3) according to the preceding claim,
**characterized in**
**that** the frame bar (22) carrying a collision sensor.

14. Drive unit (3) according to any of the preceding claims,
**characterized in**
**that** each wheel (8) is covered by a separate housing (9).

15. Passenger boarding bridge (1) comprising a drive unit (3) according to any of the preceding claims.
